# EUROPEAN PATENT APPLICATION

(11) **EP 4 059 587 A1**
(43) Date of publication of application: **21.09.2022**
(21) Application number: 20886857.0
(22) Date of filing: 28.04.2020
(51) Int. Cl.: B01D 46/10, G03G 21/00, G03G 15/20

(54) **FINE PARTICLE COLLECTION DEVICE AND IMAGE FORMATION DEVICE**

(30) Priority: 12.11.2019 JP 2019204829
(71) Applicant: Fujifilm Business Innovation Corp., Tokyo 107-0052 (JP)
(72) Inventor: NOMURA Yuka, Yokohama-shi, Kanagawa 220-8668 (JP); KAWATANI Tetsuya, Yokohama-shi, Kanagawa 220-8668 (JP); NAKAYAMA Yutaka, Yokohama-shi, Kanagawa 220-8668 (JP)
(74) Representative: Haseltine Lake Kempner LLP
(86) International application number: PCT/JP2020/018157
(87) International publication number: WO 2021/095288

(57) **Abstract**

Provided is a fine particle collection device that, among ultrafine particles 100 nm in size or smaller included in air, can collect and reduce at least those ultrafine particles that have relatively large particle diameters. This fine particle collection device 6 comprises: a ventilation pipe 61 that has a passage space 61a in which air including fine particles is made to flow; an airflow production unit 62 that produces an airflow by which the air is made to flow in the passage space 61a of the ventilation pipe 61 in a direction C in which the air is meant to be sent; and a collection unit 63 that is positioned crossing the interior of the passage space 61a of the ventilation pipe 61, and collects fine particles included in the air, wherein the collection unit 63 is structured from a metal ventilation plate having a plurality of ventilation sections 63a with aperture sizes of 0.005 mm to 0.1 mm.

## Description

### TECHNICAL FIELD

The present invention relates to a particulate capturing device and an image forming device.

### BACKGROUND ART

Patent Literature 1 describes an optional device for an electric device, the optional device including a duct for merging exhaust gases from plural exhaust ports of an electric device and discharging the exhaust gases from one outlet into the atmosphere, a filter and an electric fan built in front of the outlet of the duct, an air flow sensor that detects presence or absence of an exhaust gas from one of the plural exhaust ports, and a control device that controls an operation of the electric fan based on an output of the air flow sensor, in which the air flow sensor is disposed at an exhaust port having a highest exhaust gas velocity among the plural exhaust ports. Patent Literature 1 also describes an image forming device including the optional device.

Patent Literature 2 describes an air filter disposed in a flow path of air suctioned from a fixing device of an image forming device, the air filter including a porous body that is a powder of a metal organic framework or a porous coordination polymer, and a support body that supports the porous body, in which the porous body has an average pore diameter of 5 angstroms or more and less than 22 angstroms.

Patent Literature 3 describes a filter unit for a copying machine, the filter unit being mounted in a copying machine and removing ultrafine particles (UFPs) in air as exhaust gas generated when a toner image is heated and fixed to paper, in which a filter medium of the filter unit is pleated and accommodated in a frame, the filter medium includes a liquid-charged nonwoven fabric layer, a ratio S1/S2 obtained by dividing a total filter medium area S1 of the filter medium by an opening area S2 of the filter unit is 7 or more, and a UFP removal efficiency calculated based on particle emissions of the filter unit is 90% or more.

Patent Literature 4 describes an exhaust gas purifying filter used in a method for collecting a particulate material in exhaust gas, in which a wall-through type filter is disposed at a front stage along a direction in which the exhaust gas flows, a filter in which a needle-shaped material or a fiber is formed at a wall surface portion contacting with the exhaust gas is disposed at a rear stage, the needle-shaped material is a needle-shaped cordierite crystal grown from a thin wall of a cordierite honeycomb, and the fiber is a silicon carbide fiber or a ceramic fiber nonwoven fabric.

Patent Literature 5 describes a duct removing device for an electric dust collector in which a punching metal is attached to a downstream side of a dust collecting electrode. Patent Literature 5 also discloses that an opening ratio of the punching metal is set to 20% to 60%, and an opening diameter of the punching metal is set to 2 mm to 10 mm.

Patent Literatures 6 and 7 describe a collecting device and an exhaust gas purifying device that collect fine particles contained in air or exhaust gas by an electrostatic adsorption method.

### CITATION LIST

### PATENT LITERATURE

Patent Literature 1: Japanese Patent No. 6536082 (claims 1 and 5, Fig. 6, etc.)
Patent Literature 2: JP-A-2017-198884 (claim 1, Figs. 1 and 2, etc.)
Patent Literature 3: JP-A-2018-4774 (claim 1, Figs. 1 and 2, etc.)
Patent Literature 4: Japanese Patent No. 4649587 (claim 1, Fig. 1, etc.)
Patent Literature 5: JP-A-2002-239413 (claims 1, 4, and 5, Fig. 1, etc.)
Patent Literature 6: JP-A-H09-173897 (claim 1, Figs. 1 and 2, etc.)
Patent Literature 7: JP-A-2002-239413 (claim 1, Fig. 1, etc.)

### SUMMARY OF INVENTION

### TECHNICAL PROBLEM

The present invention is to provide a particulate capturing device and an image forming device using the collecting device, which can collect and reduce at least ultrafine particles having a relatively large particle diameter among ultrafine particles having a particle diameter of 100 nm or less contained in air, as compared with a case where a metal vent plate having plural vent portions with an opening size of 0.005 mm or more and 0.1 mm or less is not applied as a collecting portion.

### SOLUTION TO PROBLEM

A particulate capturing device according to a first aspect includes:
a vent pipe having a flow path space through which air containing fine particles flows;
an air flow generating portion configured to generate an air flow flowing in a direction in which the air is to be sent in the flow path space of the vent pipe; and
a collecting portion disposed in a state of crossing the flow path space of the vent pipe in a direction intersecting the air flow, and configured to collect the fine particles contained in the air, in which
the collecting portion is formed of a metal vent plate having a plurality of vent portions with an opening size of 0.005 mm or more and 0.1 mm or less.

A particulate capturing device according to a second aspect is the collecting device according to the first aspect, in which the vent plate has an opening ratio of 10% or more and 20% or less.

A particulate capturing device according to a third aspect is the collecting device according to the first aspect or the second aspect, in which the vent plate is formed of a mesh plate.

A particulate capturing device according to a fourth aspect is the collecting device according to the first aspect or the second aspect, in which the vent plate is formed of a porous plate.

A particulate capturing device according to a fifth aspect is the collecting device according to any one of the first to fourth aspects, in which the vent plate is disposed on an upstream side of the air flow generating portion in a direction in which the air is sent.

A particulate capturing device according to a sixth aspect is the collecting device according to the third aspect, in which the mesh plate is made of a metal including at least one selected from the group consisting of stainless steel, iron, copper, aluminum, gold, zinc, titanium, tungsten, and molybdenum.

A particulate capturing device according to a seventh aspect is the collecting device according to the fourth aspect, in which the porous plate is made of a metal including at least one selected from the group consisting of nickel, titanium, stainless steel, aluminum, iron, and copper.

An image forming device according to an eighth aspect including:
an exhaust portion configured to collect and exhaust air existing in an apparatus main body, in which
the exhaust portion includes the particulate capturing device according to any one of the first to seventh aspects.

An image forming device according to a ninth aspect is the image forming device according to the eighth aspect, further including a fixing portion configured to thermally fix an unfixed toner image to a recording medium, in which the exhaust portion includes a suction port configured to collect air existing in the fixing portion, and an exhaust port configured to exhaust the collected air to the outside.

### ADVANTAGEOUS EFFECTS OF INVENTION

According to the particulate capturing device in the first aspect, at least ultrafine particles having a relatively large particle diameter among ultrafine particles having a particle diameter of 100 nm or less contained in air can be collected and reduced, as compared with a case where the metal vent plate having the plurality of vent portions with the opening size of 0.005 mm or more and 0.1 mm or less is not applied as the collecting portion.

According to the second aspect, at least the ultrafine particles having the relatively large particle diameter among the ultrafine particles can be collected and reliably reduced, as compared with a case where the vent plate does not have the opening ratio of 10% or more and 20% or less.

According to the third aspect, it is easier to manufacture a vent plate having vent portions with an opening of a required size, as compared with a case where the vent plate is not formed of the mesh plate.

According to the fourth aspect, it is easier to adjust an opening size of a vent plate having vent portions with an opening of a required pattern, as compared with a case where the vent plate is not formed of the porous plate.

According to the fifth aspect, at least the ultrafine particles having the relatively large particle diameter among the ultrafine particles can be collected and reliably reduced, as compared with a case where the vent plate is not disposed on the upstream side of the air flow generating portion in the direction in which the air is sent.

According to the sixth aspect, the mesh plate can be manufactured by selecting a material from plural types of metals, and even when a mesh plate made of any of the metals described above is applied, at least the ultrafine particles having the relatively large particle diameter among the ultrafine particles can be collected and reduced.

According to the seventh aspect, the porous plate can be manufactured by selecting a material from plural types of metals, and even when a porous plate made of any of the metals described above is applied, at least the ultrafine particles having the relatively large particle diameter among the ultrafine particles can be collected and reduced.

According to the image forming device in the eighth aspect, at least ultrafine particles having a relatively large particle diameter among ultrafine particles having a particle diameter of 100 nm or less contained in air in the apparatus main body can be collected and reduced, as compared with a case where a collecting device to which the collecting portion formed of the metal vent plate having the plurality of vent portions with the opening size of 0.005 mm or more and 0.1 mm or less is applied is not disposed as the collecting device.

According to the ninth aspect, from air containing ultrafine particles generated in the fixing portion, at least ultrafine particles having a relatively large particle diameter can be collected and reduced.

### BRIEF DESCRIPTION OF DRAWINGS

Fig. 1 is a schematic diagram showing an entire image forming device according to a first exemplary embodiment.
Fig. 2 is a schematic diagram showing a configuration of a fixing device and a particulate capturing device, which are parts of the image forming device in Fig. 1.
Fig. 3A is a schematic diagram showing the particulate capturing device in Fig. 2.
Fig. 3B is a schematic diagram showing a configuration of a mesh plate which is a collecting portion of the collecting device in Fig. 3A.
Fig. 4 shows a schematic diagram and an enlarged view showing the configuration of the mesh plate in Fig. 3B and a part thereof.
Fig. 5 is a cross-sectional schematic diagram showing test contents adopted in a test T1 or the like.
Fig. 6 is a graph showing results of examining a relationship between a particle diameter and the number of ultrafine particles in a collecting effect of the collecting device in the test T1.
Fig. 7 is a graph showing results of examining a relationship between a size of a mesh opening of a metal mesh plate and an ultrafine particle reduction rate.
Fig. 8 is a graph showing results of a test T2 in which a relationship between an opening ratio of a metal mesh plate and a pressure loss is examined.
Fig. 9A is a schematic diagram showing a particulate capturing device according to a second exemplary embodiment.
Fig. 9B is a schematic diagram showing a configuration of a porous plate which is a collecting portion of the collecting device in Fig. 9A.
Fig. 10 is a schematic diagram showing the configuration of the porous plate in Fig. 9B.
Fig. 11 is a graph showing results of examining a relationship between an opening size of a porous metal plate and an ultrafine particle reduction rate.
Fig. 12A is a schematic diagram showing configurations related to vent holes in the porous metal plate.
Fig. 12B is a table showing a relationship of each configuration in Fig. 12A.

### DESCRIPTION OF EMBODIMENTS

Hereinafter, embodiments of the present invention will be described with reference to the drawings.

### [First Exemplary Embodiment]

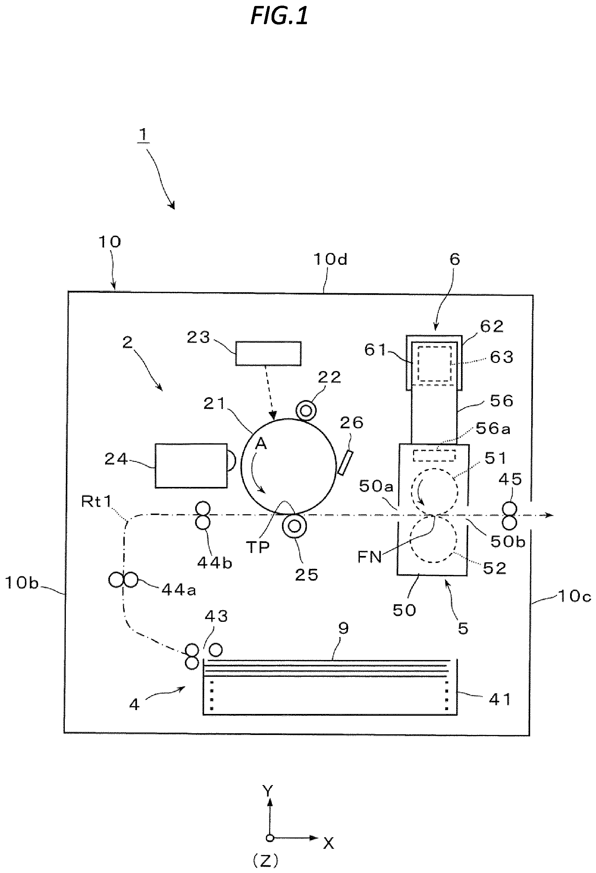

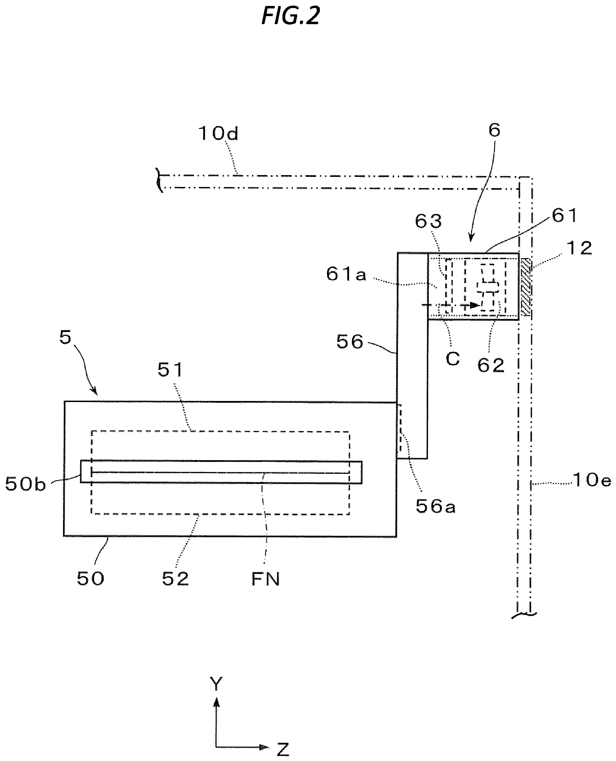

Figs. 1 and 2 show a particulate capturing device and an image forming device according to a first exemplary embodiment of the present invention. Fig. 1 shows an overall configuration of the image forming device, and Fig. 2 shows a configuration of a part of the image forming device (mainly a fixing device, and an exhaust portion including the particulate capturing device).

Arrows denoted by reference signs X, Y, and Z in each drawing such as Fig. 1 indicate directions of a width, a height, and a depth of a three-dimensional space assumed in the drawing. In addition, in the drawing, a circle at an intersection of arrows in X and Y directions indicates that a Z direction is directed vertically downward in the drawing.

### <Overall Configuration of Image Forming Device>

An image forming device 1 shown in Fig. 1 is an apparatus that forms an image on a sheet 9, which is an example of a recording medium, by an electrophotographic method. The image forming device 1 according to the first exemplary embodiment is, for example, a printer that forms an image corresponding to image information input from an externally connected device such as an information terminal.

As shown in Fig. 1, the image forming device 1 includes a housing 10 having a required external shape, and includes, in an internal space of the housing 10, an image forming device 2 that forms a toner image formed of a toner as a developer based on image information and transfers the toner image to the sheet 9, a sheet feeding device 4 that accommodates and feeds the sheet 9 to be supplied to a position where the image forming device 2 performs the transfer, a fixing device 5 which is an example of a fixing portion fixing the toner image transferred by the image forming device 2 to the sheet 9, a particulate capturing device 6 that collects fine particles generated in the fixing portion 5 and a periphery thereof, and the like.

Here, the image information is, for example, information related to an image such as a character, a figure, a photograph, or a pattern. The housing 10 is a structure formed into a required shape by various support members, exterior materials, and the like. A dashed-dotted line with an arrow in Fig. 1 and the like indicates a main transport path when the sheet 9 is transported in the housing 10.

The image forming device 2 includes a photoconductive drum 21 which is an example of an image carrier rotating in a direction indicated by an arrow A, and includes devices such as a charging device 22, an exposure device 23, a developing device 24, a transfer device 25, and a cleaning device 26 which are arranged around the photoconductive drum 21.

The charging device 22 is a device that charges an outer peripheral surface (an image formable surface) of the photoconductive drum 21 to a required surface potential. The charging device 22 includes, for example, a charging member such as a roller which is brought into contact with an image forming region of the outer peripheral surface of the photoconductive drum 21 and to which a charging current is supplied. The exposure device 23 is a device that exposes the charged outer peripheral surface of the photoconductive drum 21 based on the image information to form an electrostatic latent image. The exposure device 23 operates in response to reception of an image signal generated by performing required processing, by an image processor (not shown) or the like, on the image information input from the outside.

The developing device 24 is a device that develops the electrostatic latent image formed on the outer peripheral surface of the photoconductive drum 21 with a corresponding developer (toner) of a predetermined color (for example, black) to visualize the electrostatic latent image as a monochrome toner image. The transfer device 25 is a device that electrostatically transfers the toner image formed on the outer peripheral surface of the photoconductive drum 21 to the sheet 9. The transfer device 25 includes a transfer member such as a roller which is brought into contact with the outer peripheral surface of the photoconductive drum 21 and to which a transfer current is supplied. The cleaning device 26 is a device that cleans the outer peripheral surface of the photoconductive drum 21 by scraping off and removing unnecessary substances such as unnecessary toner and paper dust adhering to the outer peripheral surface of the photoconductive drum 21.

In the image forming device 2, each portion where the photoconductive drum 21 and the transfer device 25 face each other is a transfer position TP where the toner image is transferred.

The sheet feeding device 4 is a device configured to accommodate and feed the sheet 9 to be supplied to the transfer position TP in the image forming device 2. The sheet feeding device 4 includes devices such as an accommodating body 41 that accommodates the sheet 9, and a feeding device 43 that feeds the sheet 9.

The accommodating body 41 is an accommodating member that includes a loading plate (not shown) loading and accommodating the plural sheets 9 in a required orientation, and is attached so as to be pulled out to the outside of the housing 10 for performing an operation such as replenishment of the sheets 9. The feeding device 43 is a device that feeds the sheets 9 loaded on the loading plate of the accommodating body 41 one by one by a feed device such as plural rollers.

The sheet 9 may be any recording medium, such as plain paper, coated paper, or thick paper, which can be transported in the housing 10 and to which a toner image can be transferred and fixed, and a material, a form, and the like thereof are not particularly limited.

The fixing device 5 is a device configured to fix the toner image transferred at the transfer position TP of the image forming device 2 to the sheet 9. The fixing device 5 includes devices such as a heating rotating body 51 and a pressing rotating body 52 in an internal space of a housing 50 in which an introduction port 50a and a discharge port 50b for the sheet 9 are provided.

The heating rotating body 51 is a rotating body having a roller form, a belt-pad form, or the like that rotates in a direction indicated by an arrow, and is heated by a heating portion (not shown) such that an outer surface of the heating rotating body 51 is maintained at a required temperature. The pressing rotating body 52 is a rotating body having a roller form, a belt-pad form, or the like that rotates so as to contact and follow the heating rotating body 51 under a required pressure. As the pressing rotating body 52, a rotating body heated by the heating portion may be applied.

In the fixing device 5, a portion where the heating rotating body 51 and the pressing rotating body 52 come into contact with each other is a nip portion (a fixing processing portion) FN that performs processing such as heating and pressing for fixing an unfixed toner image to the sheet 9.

A portion indicated by the dashed-dotted line denoted by a reference sign Rt1 in Fig. 1 is a sheet feeding transport path for transporting and supplying the sheet 9 in the sheet feeding device 4 to the transfer position TP. The sheet feeding transport path Rt1 includes plural transport rollers 44a and 44b that sandwich and transport the sheet 9, plural guide members (not shown) that secure a transport space for the sheet 9 and guide the transport of the sheet 9, and the like.

In the image forming device 1, when a controller (not shown) receives a command of an operation of forming an image, a charging operation, an exposure operation, a developing operation, and a transfer operation are executed in the image forming device 2, and on the other hand, a sheet feeding operation of the sheet 9 from the sheet feeding device 4 to the transfer position TP is executed. Accordingly, after a toner image is formed on the photoconductive drum 21, the toner image is transferred to the sheet 9 supplied from the sheet feeding device 4 to the transfer position TP.

Subsequently, in the image forming device 1, in the fixing device 5, the sheet 9 to which the toner image is transferred is introduced into the nip portion FN, and a fixing operation is performed. Accordingly, an unfixed toner image is fixed to the sheet 9. The sheet 9 after the fixing is discharged and accommodated in an accommodating portion (not shown) outside the housing 10 by, for example, a discharge roller 45.

As a result, an image forming operation on one side of one sheet 9 by the image forming device 1 is completed.

The image forming device 1 includes the exhaust portion that collects and exhausts air existing in an apparatus main body. As shown in Figs. 1 to 3A and the like, the exhaust portion includes a collecting duct 56, the particulate capturing device 6, and an exhaust port 12. In an example shown in Figs. 1 to 3A and the like, the exhaust portion that collects and exhausts air existing in the fixing device 5 is provided.

### <Configuration of Particulate Capturing Device>

Next, as shown in Figs. 1 to 3A and the like, the particulate capturing device 6 includes a vent pipe 61, an air flow generating portion 62, a collecting portion 63, and the like.

Ultrafine particles collected by the collecting device 6 are so-called ultrafine particles (UFPs) having a particle diameter of 100 nm (0.1 µm) or less. Here, the particle diameter is a spherical equivalent volume diameter.

The ultrafine particles to be collected by the collecting device 6 are, for example, ultrafine particles contained in fine particles (dust) generated by cooling after a component such as wax contained in a toner is volatilized by heating during fixing processing (the fixing operation).

The vent pipe 61 is a tubular structure having a flow path space 61a through which air containing fine particles flows.

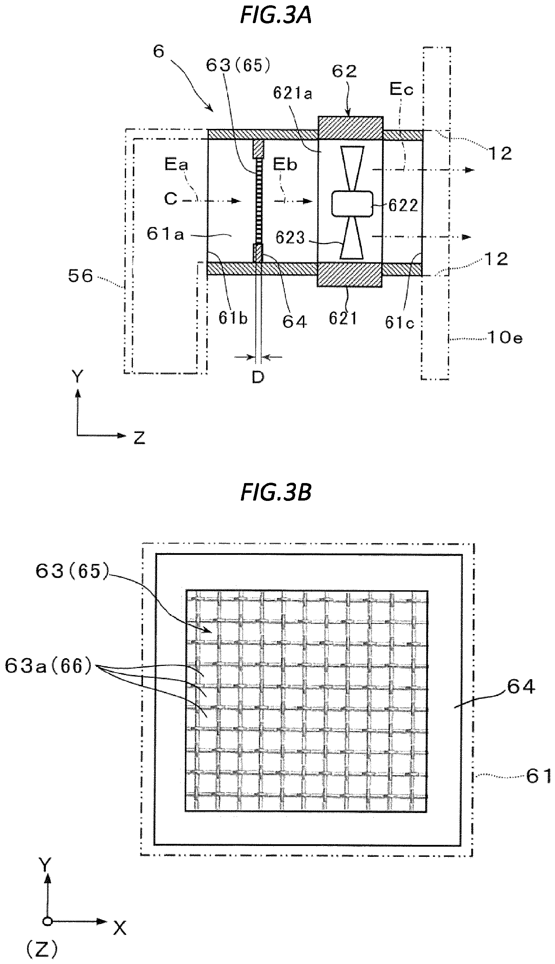

The vent pipe 61 in the first exemplary embodiment is a rectangular tubular pipe having a substantially rectangular cross-sectional shape of the flow path space 61a. As shown in Figs. 2 and 3A, one end portion 61b of the vent pipe 61 is connected to the collecting duct 56 provided on a side surface portion of the housing 50 of the fixing device 5, and the other end portion 61c of the vent pipe 61 is connected to the exhaust port 12 provided on a back surface portion 10e of the housing 10. The collecting duct 56 collects and takes in air existing in or around the housing 50 of the fixing device 5 from the suction port 56a provided at a position higher than the introduction port 50a and the discharge port 50b in the housing 50. The exhaust port 12 and the collecting duct 56 are parts of the exhaust portion.

The air flow generating portion 62 generates an air flow for flowing in a direction C in which the air is to be sent in the flow path space 61a of the vent pipe 61.

In the first exemplary embodiment, an axial fan is applied as the air flow generating portion 62. As shown in Fig. 3A, the axial fan includes, for example, a frame portion 621 in which a through portion 621a having a circular cross section is formed, a shaft portion 622 that exists in the through portion 621a of the frame portion 621 and is rotatably supported, and includes a built-in driving motor, and plural blade portions 623 erected around the shaft portion 622.

An intensity (air volume or air velocity) of the air flow generated by the air flow generating portion 62 is preferably set in a range of 0.1 m³/min to 1 m³/min from the viewpoint of preventing an increase in temperature or dew condensation in the housing 10 of the image forming device 1 (particularly in the housing 50 of the fixing device 5 in the present example) and the like.

The collecting portion 63 is disposed in a state of crossing the flow path space 61a in a middle portion of the vent pipe 61, and collects fine particles contained in the air flowing through the flow path space 61a.

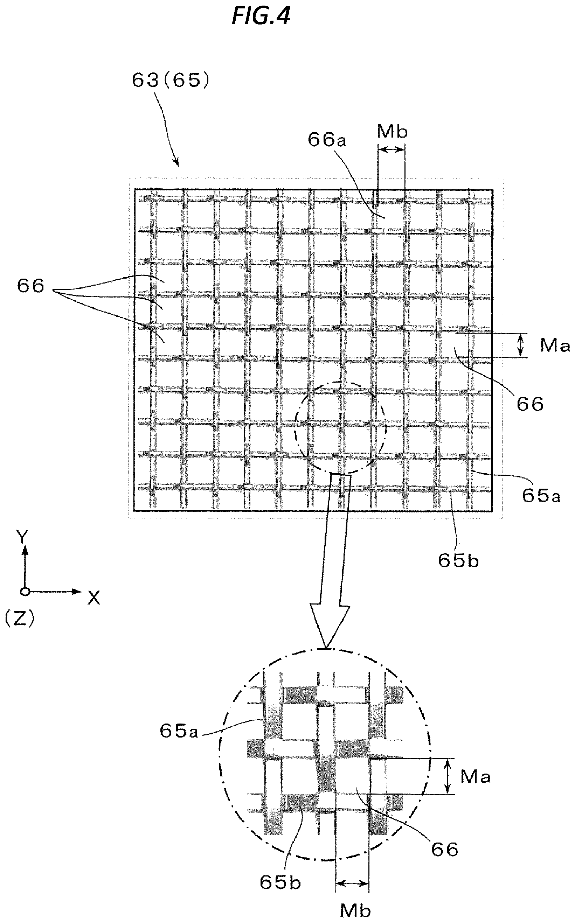

As shown in Fig. 3B and the like, the collecting portion 63 in the first exemplary embodiment is formed of a metal vent plate having plural vent portions 63a with an opening size of 0.005 mm or more and 0.1 mm or less inside an outer frame 64, and specifically, as shown in Fig. 4, the collecting portion 63 is formed of a metal mesh plate 65 having plural meshes (mesh openings) 66 with an opening size of 0.005 mm or more and 0.1 mm or less.

Here, the vent portion 63a is a gap penetrating the mesh plate 65 inside the outer frame 64. When openings have a rectangular shape, the opening size of the vent portion 63a is a value obtained by averaging vertical and horizontal dimensions of the openings of all the vent portions 63a in the vent plate of a size when actually mounted and used (a flow path area of a portion disposed in the flow path space 61a).

As shown in Fig. 4, the mesh plate 65, which is an example of the vent plate, is a mesh-shaped metal member in which the plural meshes (mesh openings) 66 having substantially the same opening shape are provided to be substantially evenly scattered. More specifically, the mesh plate 65 is a mesh-shaped metal member formed by weaving a longitudinal wire rod 65a and a transverse wire rod 65b by a weaving method such as plain weaving to form the plural meshes (mesh openings) 66.

When a mesh plate provided with the plural mesh openings 66 having a rectangular opening shape is used as the mesh plate 65, the size of the mesh opening 66 is a value obtained by averaging vertical widths Ma and horizontal widths Mb of all the mesh openings 66, as shown in Fig. 4.

When the opening size of the vent portion 63a (the mesh opening 66) of the vent plate (the mesh plate 65) is less than 0.005 mm, there are problems such as difficulty in manufacturing the vent plate (the mesh plate 65) having the vent portions 63a (the mesh openings 66) of the size, and an excessive pressure loss. In contrast, when the opening size is larger than 0.1 mm, an effect of reducing the UFPs contained in the air is particularly difficult or impossible to obtain.

The wire rods 65a and 65b forming the mesh plate 65 are made of a metal including at least one selected from the group consisting of stainless steel, iron, copper, aluminum, gold, zinc, titanium, tungsten, and molybdenum. Among these metals, stainless steel is more preferred from the viewpoint of cost reduction and the like.

The wire rods 65a and 65b forming the mesh plate 65 preferably have a wire diameter in a range of 0.01 mm to 0.06 mm from the viewpoint of keeping the opening size or an opening ratio described later within a required range and the like.

The vent plate (the mesh plate 65) may have an opening ratio of 10% or more and 60% or less, but preferably has an opening ratio of 10% or more and 20% or less.

The opening ratio indicates, in percentage, a ratio of a total opening area of all the vent portions 63a (all the mesh openings 66) to a total area of portions where the vent plate (the mesh plate 65) actually comes into contact with the air in the flow path space 61a of the vent pipe 61. Specifically, the opening ratio of the mesh plate 65 in Fig. 3B indicates, in percentage, a ratio of the total opening area of the mesh openings 66 to a flow path area of the vent pipe 61. When the opening ratio is less than 10%, there are problems that a pressure loss increases, the air is difficult to flow, and the like. In contrast, when the opening ratio is more than 60%, the effect of reducing the UFPs contained in the air cannot be particularly obtained.

When an upper limit value of the opening ratio is 20% or less, at least ultrafine particles having a relatively large particle diameter among the ultrafine particles can be collected and reliably reduced as compared with a case where an upper limit value thereof is more than 20%. The relatively large particle diameter means, for example, a case where a particle diameter is 40 nm or more.

The vent plate (the mesh plate 65) is preferably configured such that a thickness D thereof is, for example, 5 mm or less. As shown in Fig. 3A, the thickness D of the vent plate is a dimension along the direction C in which the air passes through the vent portion 63a.

When the thickness D is more than 5 mm, a dimension of a disposition space in which the vent plate is disposed increases in a direction in which the air passes. The thickness D is preferably 4 mm or less, and more preferably 2 mm or less. Incidentally, a lower limit value of the thickness D is not particularly limited as long as the mesh plate 65 can be manufactured and a required collecting performance (particularly, an effect of reducing UFPs having a relatively large particle diameter) can be obtained, and when the lower limit value is, for example, 0.02 mm, there is no particular problem.

In the collecting device 6, as shown in Figs. 2 and 3A, the mesh plate 65 as the vent plate, which is an example of the collecting portion 63, is disposed in the vent pipe 61 at a position on an upstream side of the air flow generating portion 62 in the direction C in which the air in the flow path space 61a of the vent pipe 61 is sent.

The collecting device 6 operates at least during a period in which the fixing device 5 is operating or during a predetermined period after the fixing device 5 is stopped.

That is, when an operation time of the collecting device 6 is reached, the air flow generating portion 62 is started, and an air flow flowing in a direction indicated by an arrow C is generated in the flow path space 61a of the vent pipe 61.

Accordingly, the air containing the fine particles mainly generated in the fixing operation in the fixing device 5 is suctioned and flows into the flow path space 61a of the vent pipe 61 through the collecting duct 56.

As shown in Fig. 3A, an air Ea before collection, which contains the fine particles and flowed in at this time, substantially collides with the mesh plate 65 as the vent plate which is an example of the collecting portion 63, passes through the mesh opening 66 which is the vent portion 63a of the mesh plate 65, and moves as an air Eb after collection.

At this time, the air Ea before collection passes through the metal mesh plate 65 having the plural mesh openings 66 with the opening size of 0.005 mm or more and 0.1 mm or less while colliding with the mesh plate 65. Accordingly, ultrafine particles having a particle diameter of 100 nm or less among fine particles contained in the air Ea before collection are likely to adhere to the wire rods of the metal mesh plate 65 when coming into contact with the wire rods. As a result, in the air Eb after collection, ultrafine particles having a relatively large particle diameter among fine particles contained in air passing through the mesh plate 65 are collected and reduced by the metal mesh plate 65.

The air Eb after collection passes through the air flow generating portion 62, and is discharged to the outside from the exhaust port 12 of the housing 10 of the image forming device 1 as a final exhaust air Ec.

At this time, in particular, ultrafine particles having a small particle diameter passing through the mesh 66 of the mesh plate 65 tend to be more likely to undergo Brownian motion (diffusion) as a particle diameter thereof decreases, and therefore, even when passing through the mesh 66 of the mesh plate 65, the ultrafine particles are more likely to adhere to and be collected by components such as an inner wall surface of the flow path space 61a of the vent pipe 61 existing on a downstream side of the mesh plate 65, and the blade portions in the air flow generating portion 62.

For the final exhaust air Ec at this time, ultrafine particles having a relatively large particle diameter are collected and reduced by the metal mesh plate 65 as compared with the air Ea before collection, but ultrafine particles having a small particle diameter adhere to the inner wall surface of the flow path space 61a of the existing vent pipe 61 and the like after passing through the mesh plate 65, and are collected before exhaust, and thus a total amount of ultrafine particles is also reduced.

Incidentally, the reduction of the total amount of ultrafine particles means that a total amount of ultrafine particles in a case where the mesh plate 65 as the vent plate is provided as the collecting portion 63 is smaller than a total amount of ultrafine particles in a case where the mesh plate 65 as the vent plate is not provided.

### <Test T1 Relating to Collecting Effect>

Next, a test T1 relating to a collecting effect of the collecting device 6 will be described.

The test T1 relating to the collecting effect at this time is a test performed in accordance with a test standard (RAL-UZ205) of Blue Angel Mark, which is a German environment label.

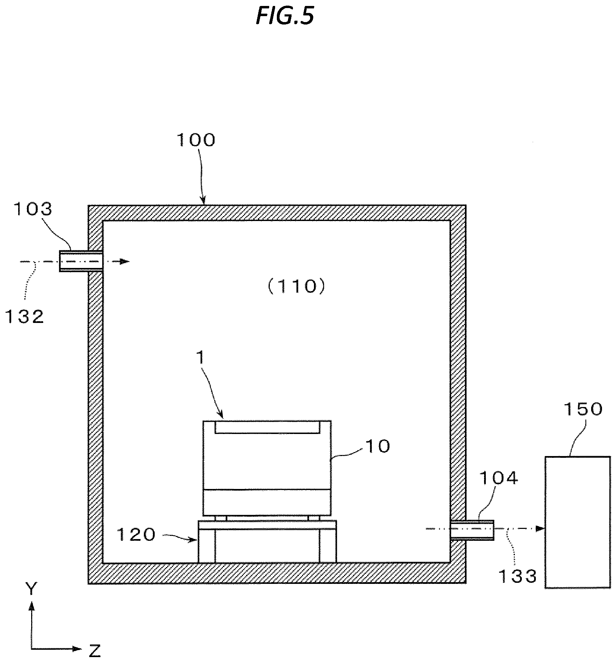

As shown in Fig. 5, the test T1 was performed by placing and equilibrating the image forming device 1 to be measured on a mounting table 120 in a space 110 of a test chamber 100 set to a predetermined room environment (temperature: 23°C, humidity: 50% RH) with high airtightness, which is a test environment room, activating the image forming device 1, performing a predetermined image forming operation for 10 minutes (600 s), and measuring, by a measuring device (manufactured by TSI Corporation: condensed particle counter CPC Model 3775) 150, an amount of ultrafine particles (UFPs) or the like contained in a room air during the image forming operation and within a predetermined time after the operation is stopped.

The test chamber 100 has a room having a volume of, for example, 5.1 m³, and a clean air 132 is supplied into the room from an air supply port 103, and the room air 133 is exhausted from an exhaust port 104. The room air 133 exhausted from the test chamber 100 is communicated with and sent to the measuring device 150.

The image forming device 1 to be measured was applied in which the mesh plate 65 having the following configuration of the collecting portion 63 of the collecting device 6 is disposed. The image forming device 1 as a comparison reference was also prepared in which the mesh plate 65 as the vent plate of the collecting portion 63 of the collecting device 6 is not disposed.

In the collecting device 6, the total area of the portions of the mesh plate 65 to be brought into contact with the air (the flow path area of the vent pipe 61) was 14,400 mm². As the mesh plate 65 of the collecting device 6, a mesh plate (a metal mesh plate) formed by plain weaving wire rods made of a metal of stainless steel, and having a size of the mesh opening 66 of 0.22 mm, an opening ratio of 40%, and a thickness D of 0.026 mm was used. During the operation of the collecting device 6, the axial fan, which is the air flow generating portion 62, was operated to generate an air flow having an air volume of 0.33 m³/min. Further, the collecting device 6 was operated during a period from the start to the stop of the image forming operation in the test.

An image formed by the image forming operation is a chart designated by BA (Blue Angel) having an image area ratio of 5%. As the fixing device 5, a device that performs a fixing operation in which a fixing heating temperature is set to 150°C to 180°C was used. As the toner, a toner formed of a resin, a pigment, wax particles, and the like was used.

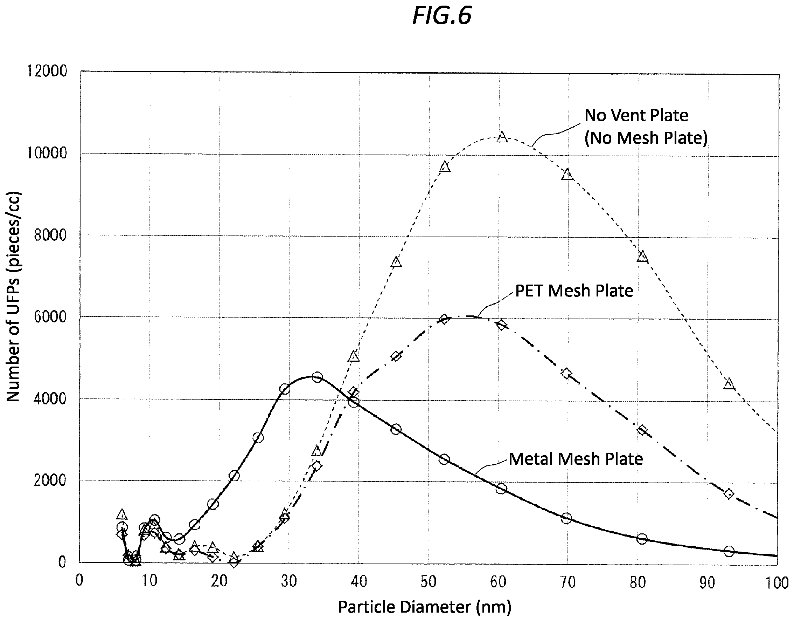

In the test T1, a relationship between a particle diameter and the number of ultrafine particles (UFPs) was examined. Results at this time are shown in Fig. 6.

In the test T1, as a comparative example of the mesh plate 65, a mesh plate (a PET mesh plate) formed by plain-weaving wire rods made of PET, which is not metal, was prepared, and the collecting device 6 to which the PET mesh plate is attached was also examined. A configuration of the PET mesh plate was substantially the same as that of the metal mesh plate 65 except for the material.

From the results shown in Fig. 6, in a case of the image forming device as the comparison reference in which the vent plate (the mesh plate 65) is not attached to the collecting device 6, it is found that the number of UFPs having a particle diameter of more than 30 nm is relatively large, and in particular, in a case of UFPs having a particle diameter of about 60 nm, the number of UFPs is a maximum of about 10,000 (pieces/cc).

On the other hand, in a case of the image forming device 1 according to an example in which the metal mesh plate 65 is attached to the collecting device 6, it is found from the results shown in Fig. 6 that the number of UFPs having a relatively large particle diameter (for example, 45 nm or more) is significantly reduced. This fact is clear even when compared with a result of the image forming device 1 according to the comparative example in which the PET mesh plate 65 is attached to the collecting device 6.

Incidentally, in the image forming device 1 according to the example, the number of UFPs having a relatively small particle diameter (for example, less than 40 nm) tends to be larger than that in the result of the image forming device 1 according to the comparative example, as seen from the results shown in Fig. 6.

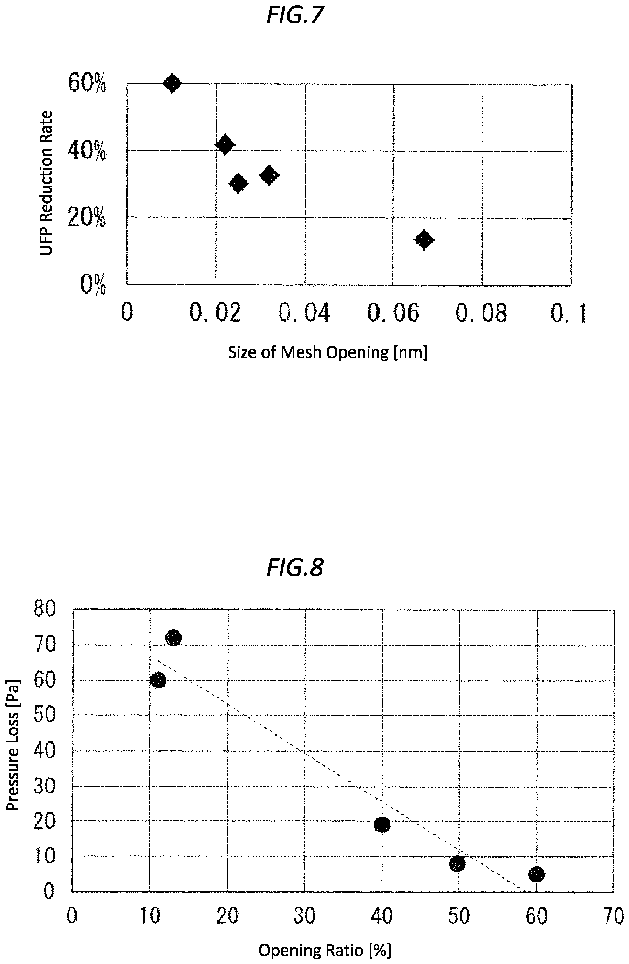

Subsequently, in the test T1, a relationship between a size of the mesh opening 66 of the mesh plate 65 and a UFP reduction rate was examined. Results at this time are shown in Fig. 7.

In the test T1 at this time, plural mesh plates 65 were prepared each having different size of mesh openings 66, and a UFP reduction rate when each mesh plate 65 is attached to the collecting device 6 was examined.

A UFP value was determined based on the method described in the test standard (RAL-UZ205). The UFP reduction rate was determined based on a difference between presence and absence of the mesh plate 65.

Five types of metal mesh plates 65 were prepared each having opening sizes of 0.01 mm, 0.022 mm, 0.025 mm, 0.032 mm, and 0.067 mm as shown on a horizontal axis of Fig. 7. At this time, the metal mesh plates 65 were adjusted such that all opening ratios are maintained at about 40% even when a size of the mesh opening 66 is changed.

From results shown in Fig. 7, it is found that in the metal mesh plate 65, the UFP reduction rate tends to gradually increase as the size of the mesh opening 66 decreases, and conversely, the UFP reduction rate tends to gradually decrease as the size of the mesh opening 66 increases.

Therefore, in the case of the metal mesh plate 65, it can be said that the opening size and the UFP reduction rate are substantially inversely proportional to each other. From this result, it can be said that when the size of the mesh opening is in a range of 0.01 mm or more and 0.07 mm or less (about 0.08 mm or less), the effect of reducing the UFPs can be obtained.

### <Test T2 Relating to Collecting Effect>

A test T2 was performed to examine a relationship between an opening ratio of the mesh opening 66 of the mesh plate 65 of the collecting device 6 and a pressure loss. Results of the test T2 are shown in Fig. 8.

In the test T2 at this time, plural mesh plates 65 were prepared each having different opening ratio of mesh openings 66, and a UFP reduction rate when each mesh plate 65 is attached to the collecting device 6 was examined.

As for the opening ratio of the metal mesh plate 65, mesh plates having five types of opening ratios of 11%, 13%, 40%, 49.5%, and 60% as shown on the horizontal axis of FIG. 8 were prepared.

In the test T2, when the mesh plate 65 having each of the above opening ratios was disposed in the vent pipe 61 of the collecting device 6, and an air flow of a constant air volume (0.33 m³/min) was generated by the air flow generating portion 62, an air pressure (Pa) at a position on an upstream side of the mesh plate 65 and an air pressure (Pa) at a position on a downstream side of the mesh plate 65 were measured, and then a pressure loss (Pa) was examined by obtaining a difference therebetween. The air pressure was measured by a differential pressure gauge (manufactured by TESTO: Model 5122).

From results shown in Fig. 8, it is found that in the metal mesh plate 65 having the opening ratio described above, when the opening ratio is in a range of about 10% to 60%, a pressure loss is in a range of about 5 Pa to 80 Pa.

Incidentally, the opening ratio is preferably 10% or more and 20% or less from the viewpoint that UFPs having a relatively large particle diameter can be reliably collected and the like.

In the collecting device 6 according to the first exemplary embodiment, when the thickness D of the mesh plate 65, which is the vent plate, is set to 5 mm or less, the dimension of the disposition space in which the mesh plate 65 is disposed can be reduced in the direction C in which the air passes, and for example, a size of the disposition space of the mesh plate 65 can be reduced, which can contribute to miniaturization of the collecting device 6 and the image forming device 1 equipped with the collecting device 6. In particular, as compared with other types of collecting portions such as an ordinary nonwoven fabric filter or a pleated filter, the size of the disposition space can be reduced, which is advantageous.

In the collecting device 6, the mesh plate 65 is disposed at the position on the upstream side of the air flow generating portion 62 in the direction C in which the air is sent, the air collected from the fixing device 5 and introduced into the vent pipe 61 first comes into contact with the mesh plate 65 and passes through the mesh plate 65, and the total amount of ultrafine particles is reliably reduced as compared with a case where the mesh plate 65 is disposed at a position on a downstream side of the air flow generating portion 62.

Further, in the collecting device 6, it is confirmed that deterioration in a collecting performance of the mesh plate 65 due to clogging of the mesh opening 66 or the like is less likely to occur. Therefore, the collecting device 6 has an advantage that replacement of the mesh plate 65 is substantially unnecessary, and as a result, the running cost can be reduced, and the maintenance work can be reduced as compared with other types of collecting portions that require regular replacement.

### [Second Exemplary Embodiment]

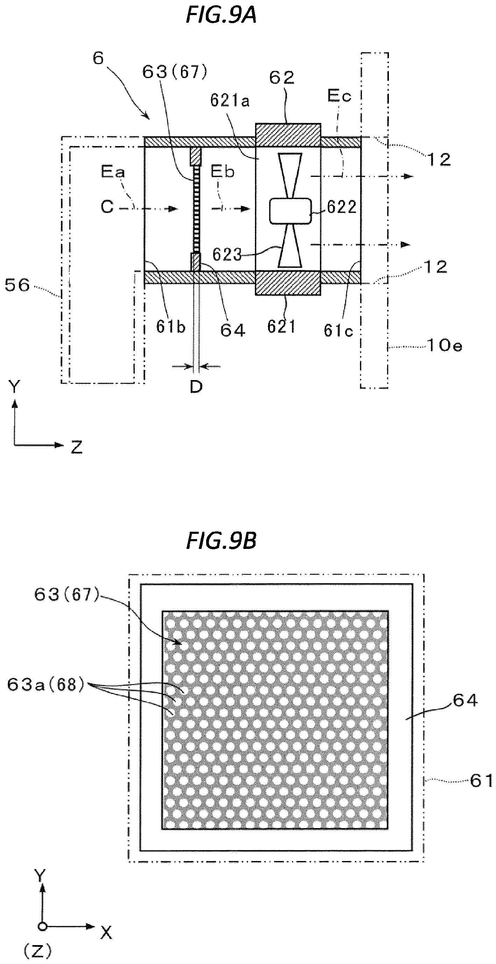

Fig. 9A shows a particulate capturing device according to a second exemplary embodiment of the present invention.

The particulate capturing device 6 according to the second exemplary embodiment has the same configuration as that of the collecting device 6 according to the first exemplary embodiment except that the vent plate of the collecting portion 63 is changed by applying a porous plate 67 instead of the mesh plate 65.

As shown in Fig. 9B and the like, the porous plate 67 is formed of a porous metal plate having plural vent holes 68 with an opening size of 0.005 mm or more and 0.1 mm or less.

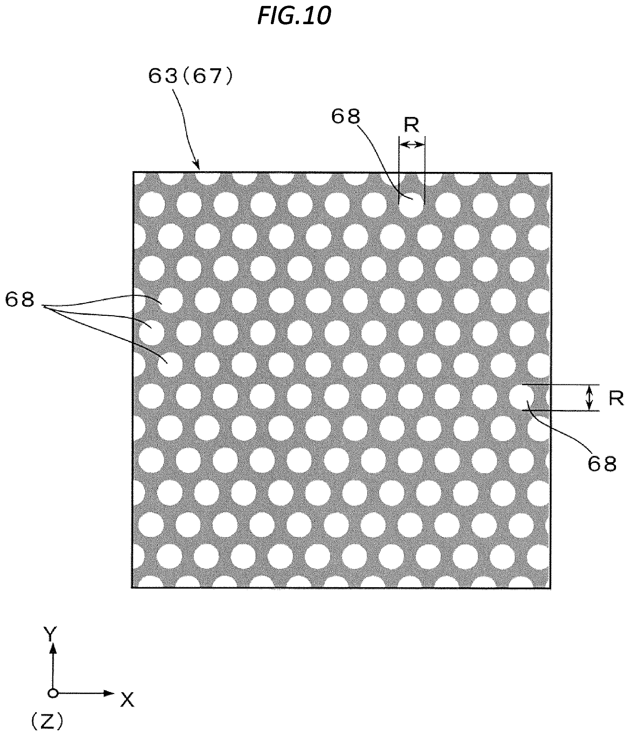

As shown in Figs. 9B and 10, the porous plate 67 is a plate-shaped member in which the plural vent holes 68 having the same opening shape are provided so as to be substantially evenly scattered. When a porous plate provided with the plural vent holes 68 having a circular opening shape is used as the porous plate 67, an opening size of the vent hole 68 of the porous plate 67 is set to a value obtained by averaging diameters R of all the vent holes 68, as shown in Fig. 10.

When an opening has a shape other than a circular shape or a rectangular shape, an equivalent circle diameter of the opening is defined as the opening size.

The meaning of a range (0.005 mm or more and 0.1 mm or less) of the opening size of the vent hole 68 as the vent portion 63a of the porous plate 67 which is another example of the vent plate, the meaning of the thickness D of the porous plate 67, and the like are the same as those in the case of the mesh plate 65 in the first exemplary embodiment described above.

The vent plate (the porous plate 67) may have an opening ratio of 10% or more and 60% or less as in the case of the mesh plate 65 in the first exemplary embodiment, but preferably has an opening ratio of 10% or more and 20% or less.

The meaning and a preferable range of the opening ratio range are the same as those in the case of the mesh plate 65 in the first exemplary embodiment described above. Specifically, the opening ratio of the porous plate 67 in Fig. 9B indicates, in percentage, a ratio of a total opening area of the vent holes 68 to the flow path area of the vent pipe 61.

As in the case of the mesh plate 65 in the first exemplary embodiment, the porous plate 67 is also manufactured by using a metal material. More specifically, a porous plate is obtained by subjecting a plate material made of the material to a predetermined drilling process.

As the metal forming the porous plate 67, a metal including at least one selected from the group consisting of nickel, titanium, stainless steel, aluminum, iron, and copper is used. Among these metals, aluminum is more preferred from the viewpoint of cost reduction and the like.

When a predetermined operation time is reached, the collecting device 6 to which the porous plate 67 is applied also operates substantially in the same manner as in the case of the collecting device 6 according to the first exemplary embodiment.

That is, in the collecting device 6, as shown in Fig. 9A, the air Ea before collection, which contains the fine particles and flowed into the flow path space 61a of the vent pipe 61 by the operation of the air flow generating portion 62, substantially collides with the porous metal plate 67 as the vent plate which is an example of the collecting portion 63, passes through the vent hole 68 which is the vent portion 63a of the porous plate 67, and moves as the air Eb after collection.

At this time, the air Ea before collection passes through the porous plate 67 having the plural vent holes 68 with the opening size of 0.005 mm or more and 0.1 mm or less. Accordingly, when ultrafine particles having a particle diameter of 100 nm or less contained in the air Ea before collection collide with the porous plate 67, particles having a small particle diameter pass through the vent hole 68, while ultrafine particles having a relatively large particle diameter move with inertia and are likely to adhere to non-ventilation portions of the porous plate 67 and the like. As a result, ultrafine particles having a relatively large particle diameter among the fine particles contained in the passing air are collected and reduced.

The air Eb after collection passes through the air flow generating portion 62, and is discharged to the outside from the exhaust port 12 of the housing 10 of the image forming device 1 as the final exhaust air Ec.

At this time, in particular, ultrafine particles passing through the vent hole 68 of the porous plate 67 tend to be more likely to undergo Brownian motion (diffusion) as a particle diameter thereof decreases, in substantially the same manner as in the case of the mesh plate 65 described above, and therefore, even when passing through the vent hole 68 of the porous plate 67, the ultrafine particles are more likely to adhere to and be collected by the components such as the inner wall surface of the flow path space 61a of the vent pipe 61 existing on the downstream side of the porous plate 67, and the blade portions in the air flow generating portion 62.

For the final exhaust air Ec at this time, ultrafine particles having a relatively large particle diameter are collected and reduced as compared with the air Ea before collection, but ultrafine particles having a small particle diameter adhere to the inner wall surface of the flow path space 61a of the existing vent pipe 61 and the like after passing through the porous plate 67, and are collected before exhaust, and thus a total amount of ultrafine particles is also reduced.

Therefore, the final exhaust air Ec at this time is air in which a total amount of ultrafine particles is reduced as compared with the air Ea before collection.

### <Test T1 Relating to Collecting Effect>

Next, the test T1 relating to a collecting effect of the collecting device 6 will be described.

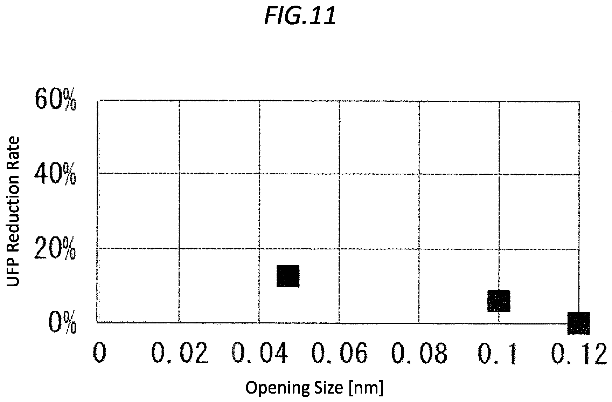

In the test T1 adopted in the first exemplary embodiment, a relationship between an opening size of the vent hole 68 of the porous metal plate 67 and a UFP reduction rate was examined. Results at this time are shown in Fig. 11.

In the test T1, plural porous metal plates 67 were prepared each having different opening size (diameter R) of vent holes 68, and a UFP reduction rate when each porous plate 67 is attached to the collecting device 6 was examined.

Three types of porous metal plates (so-called punching metal) 67 were prepared each having opening sizes of 0.47 mm, 0.10 mm, and 0.12 mm as shown on a horizontal axis of Fig. 11.

At this time, the porous plates 67 were adjusted such that all opening ratios are maintained at about 40% even when an opening size of the vent hole 68 is changed.

From results shown in Fig. 11, it is found that in the porous metal plate 67, the UFP reduction rate tends to increase as the opening size of the vent hole 68 decreases, and conversely, the UFP reduction rate tends to decrease as the opening size of the vent hole 68 increases. It is also found that when the opening size is 0.12 mm, the UFP reduction rate is substantially zero.

Therefore, in the case of the porous metal plate 67, it can be said that the opening size and the UFP reduction rate are substantially inversely proportional to each other. From this result, it can be said that when the opening size is in a range of 0.04 mm or more and 0.1 mm or less, an effect of reducing UFPs can be obtained.

Summarizing the above results, in the collecting device 6 to which the porous metal plate 67 is applied as the vent plate of the collecting portion 63, it can be said that the effect of reducing the UFPs can be obtained when the opening size of the vent hole 68 is in the range of 0.04 mm or more and 0.1 mm or less.

Incidentally, for the collecting device 6 to which the porous metal plate 67 is applied, a relationship between a particle diameter and the number of ultrafine particles (UFPs) was also examined by the test T1 in the first exemplary embodiment.

Also in this case, it is confirmed that substantially the same results as the results (Fig. 6) of the test T1 in the first exemplary embodiment are obtained.

In addition, for the collecting device 6 to which the porous metal plate 67 is applied, a relationship between an opening ratio of the vent hole 68 of the porous plate 67 and a pressure loss was examined by the test T2 in the first exemplary embodiment.

It is confirmed that results at this time are substantially the same as the results (Fig. 8) of the test T1 in the first exemplary embodiment.

With the collecting device 6 according to the second exemplary embodiment, other effects obtained by the collecting device 6 according to the first exemplary embodiment described above can also be obtained.

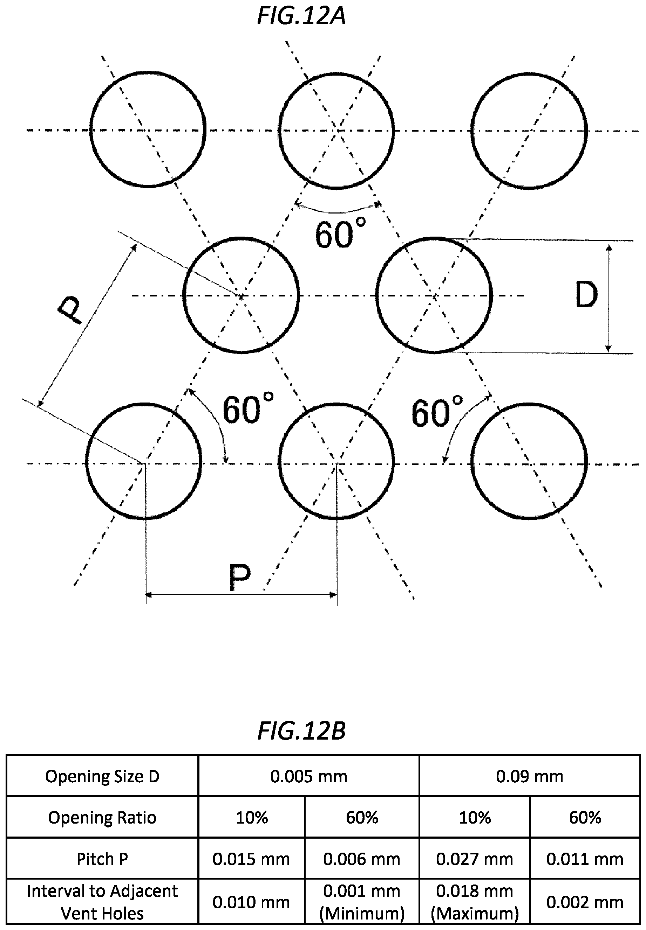

Fig. 12A shows an opening size D of the vent hole 68 of the porous metal plate 67 and a pitch P between adjacent vent holes 68. Fig. 12B shows two types of opening ratios with respect to each opening size when two types of sizes (0.005 mm and 0.09 mm) are adopted as the opening size D of the vent hole 68, pitches P at respective opening ratios, and intervals to adjacent vent holes 68.

### [Modifications]

The present invention is not limited to the contents exemplified in the first and second exemplary embodiments, and can be modified in various ways, and includes, for example, modifications as listed below.

In the first and second exemplary embodiments, the collecting device 6 in which the vent plate of the collecting portion 63 is disposed at the position on the upstream side of the air flow generating portion 62 in the direction C in which the air is sent has been exemplified, but in the collecting device 6, the vent plate of the collecting portion 63 may be disposed at the position on the downstream side of the air flow generating portion 62 in the direction C.

In the first and second exemplary embodiments, a case where the particulate capturing device 6 is applied as a collecting device that collects fine particles containing ultrafine particles generated in the fixing device 5 of the image forming device 1 has been exemplified, but a collecting device that collects ultrafine particles may be provided in an exhaust portion that collects and exhausts air containing fine particles generated in a constituent portion other than the fixing device 5 of the image forming device 1.

The collecting device 6 according to the present invention can also be applied to various devices other than an image forming device as long as ultrafine particles need to be collected.

In addition, an image forming device to which the particulate capturing device 6 is applied is not limited to the image forming device 1 of the type exemplified in the first exemplary embodiment, and may be an image forming device of another type using an electrophotographic method (including a type of forming a multicolor image). Further, the image forming device to which the collecting device 6 is applied may be an image forming device adopting an image forming method (for example, a liquid droplet ejecting method, a printing method, or the like) other than the electrophotographic method.

The present application is based upon and claims the benefit of the priority of Japanese Patent Application No. 2019-204829, filed on November 12, 2019.

### REFERENCE SIGNS LIST

1: image forming device
5: fixing device (example of fixing portion)
6: particulate capturing device
9: sheet (example of recording medium)
12: exhaust port (part of exhaust portion)
56: collecting duct (part of exhaust portion)
61: vent pipe
61a: flow path space
62: air flow generating portion
63: collecting portion
63 a: vent portion
65: mesh plate (example of vent plate)
66: mesh opening (example of vent portion)
67: porous plate (example of vent plate)
68: vent hole (example of vent portion)
C: direction in which air is sent (direction in which air passes)

## Claims

1. A particulate capturing device comprising:
a vent pipe having a flow path space through which air containing fine particles flows;
an air flow generating portion configured to generate an air flow flowing in a direction in which the air is to be sent in the flow path space of the vent pipe; and
a collecting portion disposed in a state of crossing the flow path space of the vent pipe in a direction intersecting the air flow, and configured to collect the fine particles contained in the air, wherein
the collecting portion is formed of a metal vent plate having a plurality of vent portions with an opening size of 0.005 mm or more and 0.1 mm or less.

2. The particulate capturing device according to claim 1,
wherein the vent plate has an opening ratio of 10% or more and 20% or less.

3. The particulate capturing device according to claim 1 or 2,
wherein the vent plate is formed of a mesh plate.

4. The particulate capturing device according to claim 1 or 2,
wherein the vent plate is formed of a porous plate.

5. The particulate capturing device according to any one of claims 1 to 4,
wherein the vent plate is disposed on an upstream side of the air flow generating portion in a direction in which the air is sent.

6. The particulate capturing device according to claim 3,
wherein the mesh plate is made of a metal including at least one selected from the group consisting of stainless steel, iron, copper, aluminum, gold, zinc, titanium, tungsten, and molybdenum.

7. The particulate capturing device according to claim 4,
wherein the porous plate is made of a metal including at least one selected from the group consisting of nickel, titanium, stainless steel, aluminum, iron, and copper.

8. An image forming device comprising:
an exhaust portion configured to collect and exhaust air existing in an apparatus main body,
wherein the exhaust portion comprises the particulate capturing device according to any one of claims 1 to 7.

9. The image forming device according to claim 8, further comprising
a fixing portion configured to thermally fix an unfixed toner image to a recording medium,
wherein the exhaust portion comprises:
a suction port configured to collect air existing in the fixing portion; and
an exhaust port configured to exhaust the collected air to the outside.
